# EUROPÄISCHE PATENTANMELDUNG

(11) **EP 4 786 383 A1**
(43) Veröffentlichungstag der Anmeldung: **05.08.2026**
(21) Anmeldenummer: 26153983.7
(22) Anmeldetag: 26.01.2026
(51) Int. Cl.: B65G 47/08, B65G 47/26, B65G 47/88

(54) **VORRICHTUNG ZUR ANPASSUNG EINES ABSTANDES ZWISCHEN BEHÄLTNISSEN**

(30) Priorität: 30.01.2025 DE 102025103512
(71) Anmelder: Syntegon Technology GmbH, 70372 Stuttgart (DE)
(72) Erfinder: Trittner, Tobias, 74523 Schwäbisch Hall (DE); Burkhardt, Martin, 91555 Feuchtwangen (DE); Knausenberger, Stefan, 91628 Steinsfeld (DE)
(74) Vertreter: Kreuels, Justus

(57) **Zusammenfassung**

Vorrichtung (1) zur Anpassung eines Abstandes zwischen Behältnissen (10), vorzugsweise Vials und/oder Karpulen und/oder Spritzen, aufweisend eine Abgabehalterung (2) mit mindestens zwei ersten Behältnisaufnahmen (2a), welche mit einem unveränderlichen ersten Abstand (D1) zueinander angeordnet und jeweils zum Halten eines der Behältnisse (10) eingerichtet sind, weiter aufweisend eine Annahmehalterung (3) mit mindestens zwei zweiten Behältnisaufnahmen (3a), welche mit einem von dem ersten Abstand (D1) unterschiedlichen unveränderlichen zweiten Abstand (D2) zueinander angeordnet und jeweils zum Halten eines der Behältnisse (10) eingerichtet sind, weiter aufweisend ein von der Abgabehalterung (2) und der Annahmehalterung (3) unabhängiges passives Überführungselement (4), mittels welchem eine Überführung der Behältnisse (10) von den ersten Behältnisaufnahmen (2a) zu den zweiten Behältnisaufnahmen (3a) bewirkbar ist, wobei die Vorrichtung (1) ein Antriebssystem (5) aufweist, welches dazu eingerichtet ist, eine lineare Relativbewegung zwischen der Abgabehalterung (2), der Annahmehalterung (3) und dem passiven Überführungselement (4) zu erzeugen.

## Beschreibung

Die Erfindung betrifft eine Vorrichtung zur Anpassung eines Abstandes zwischen Behältnissen, eine Füllmaschine mit einer solchen Vorrichtung sowie ein Verfahren zum Betreiben einer solchen Vorrichtung.

Behältnisse, welche insbesondere für das Befüllen mit pharmazeutischen Produkten vorgesehen sind, wie beispielsweise Vials, Karpulen und Spritzen, werden an der zum Befüllen und ggf. Verschließen der Behältnisse vorgesehenen Füllmaschine in der Regel in speziell dafür vorgesehenen Packmitteln, wie beispielsweise Tubs oder Trays, bereitgestellt. In diesen Packmitteln sind die Behältnisse typischerweise mit einem geringen packmittelspezifischen Abstand zueinander angeordnet, um möglichst viele Behältnisse in einem einzelnen Packmittel unterbringen zu können. Ein solcher packmittelspezifischer Abstand kann vom jeweiligen Packmitteltyp abhängig sein.

Für die Verarbeitung auf der Füllmaschine ist es in der Regel erforderlich, den Abstand zwischen den Behältnissen auf einen auch als maschinenspezifisches Teilungsmaß bezeichneten maschinenspezifischen Abstand anzupassen. Um ein optimales Befüllen und Verschließen der Behältnisse zu ermöglichen, ist für an der Befüll- und/oder Verschließstation der Füllmaschine meist ein maschinenspezifischer Abstand notwendig, welcher größer als der packmittelspezifische Abstand ist. Daher ist insbesondere eine Anpassung des Abstandes zwischen den Behältnissen erforderlich, bevor die Behältnisse der Befüll- und/oder Verschließstation zugeführt werden können. Die Anpassung des Abstandes zwischen den Behältnissen kann beispielsweise ein Verhältnis zwischen 1:1 und 1:7 haben. Um eine hohe Ausbringleistung zu ermöglichen, ist es wünschenswert, innerhalb eines Maschinentaktes den Abstand zwischen einer großen Anzahl von Behältnissen anzupassen. Der objektschonende Transport soll dabei gewährleistet sein.

Aus dem Stand der Technik sind verschiedene Vorrichtungen für die Anpassung des Abstandes zwischen Behältnissen bekannt.

Beispielsweise erfolgt eine Anpassung des Abstandes mittels einer Transportschnecke, wobei die Änderung des Abstandes durch die Steigung der Transportschnecke vorgegeben ist. Eine solche Transportschnecke bietet wenig Flexibilität, um unterschiedliche Abstände zu erzeugen. Zudem sind die Objekte starken Reibungseinflüssen ausgesetzt und können ggf. verkratzt werden.

Außerdem ist eine Vorrichtung mit sogenannten Movern bekannt, bei welcher jedes Behältnis einzeln in einen der Mover eingestellt wird und dann unabhängig von anderen Behältnissen verfahren wird. Die Mover sind im Verhältnis zu den Behältnissen breit ausgebildet, sodass für geringe packmittelspezifische Abstände mehrere parallel übereinander liegende Vorrichtungen mit Movern eingesetzt werden müssen. Nachteilig sind die hohen Kosten einer solchen Vorrichtung und ein vergleichsweise hoher Platzbedarf, was ein kompaktes Layout der Füllmaschine erschwert.

Zudem ist aus der DE 10 2020 134 783 A1 eine Vorrichtung mit Scherenmechanismus bekannt. Bei einer solchen Vorrichtung werden die Behältnisse in einzelnen Aufnahmeeinheiten angeordnet und anschließend mittels des Scherenmechanismus bewegt und zueinander gespreizt, um den Abstand zwischen den Aufnahmeeinheiten zu verändern. Eine solche Vorrichtung erfordert viel Bauraum und hat ein vergleichsweise hohes Gewicht. Ein im Vergleich zum packmittelspezifischen Abstand großer maschinenspezifischer Abstand erfordert bei dieser Lösung einen entsprechend großen Verfahrweg der einzelnen Aufnahmeeinheiten.

Hiervon ausgehend ist es Aufgabe der vorliegenden Erfindung, die mit Bezug auf den Stand der Technik geschilderten Probleme wenigstens teilweise zu lösen und insbesondere eine Vorrichtung sowie ein Verfahren anzugeben, mit dem in einfacher und kostengünstiger Weise eine Anpassung eines Abstandes zwischen Behältnissen möglich ist.

Diese Aufgabe wird gelöst mit einer Vorrichtung, einer Füllmaschine und einem Verfahren gemäß den Merkmalen der unabhängigen Patentansprüche. Weitere vorteilhafte Ausgestaltungen sind in den abhängig formulierten Patentansprüchen sowie in der Beschreibung und insbesondere auch in der Figurenbeschreibung angegeben. Es ist darauf hinzuweisen, dass der Fachmann einzelne Merkmale in technologisch sinnvoller Weise miteinander kombinieren kann und damit zu weiteren Ausgestaltungen der Erfindung gelangt.

Hier beschrieben werden soll eine Vorrichtung zur Anpassung eines Abstandes zwischen Behältnissen, vorzugsweise Vials und/oder Karpulen und/oder Spritzen, aufweisend eine Abgabehalterung mit mindestens zwei ersten Behältnisaufnahmen, welche mit einem unveränderlichen ersten Abstand zueinander angeordnet und jeweils zum Halten eines der Behältnisse eingerichtet sind, weiter aufweisend eine Annahmehalterung mit mindestens zwei zweiten Behältnisaufnahmen, welche mit einem von dem ersten Abstand unterschiedlichen unveränderlichen zweiten Abstand zueinander angeordnet und jeweils zum Halten eines der Behältnisse eingerichtet sind, weiter aufweisend ein von der Abgabehalterung und der Annahmehalterung unabhängiges passives Überführungselement, mittels welchem eine Überführung der Behältnisse von den ersten Behältnisaufnahmen zu den zweiten Behältnisaufnahmen bewirkbar ist, wobei die Vorrichtung ein Antriebssystem aufweist, welches dazu eingerichtet ist, eine lineare Relativbewegung zwischen der Abgabehalterung, der Annahmehalterung und dem passiven Überführungselement zu erzeugen.

Die Abgabehalterung kann auch als Schieber bezeichnet werden und hat insbesondere einen Körper, an bzw. in welchem die mindestens zwei ersten Behältnisaufnahmen angebracht bzw. eingebracht sind. Der Körper kann massiv ausgebildet sein oder neben den ersten Behältnisaufnahmen beispielsweise Aussparungen zur Gewichtsreduktion aufweisen. Die Abgabehalterung kann einteilig oder mehrteilig ausgebildet sein. Die mindestens zwei ersten Behältnisaufnahmen sind in einem unveränderlichen ersten Abstand, welcher insbesondere einem packmittelspezifischen Abstand entspricht, zueinander angeordnet. Die Abgabehalterung kann mehr als zwei erste Behältnisaufnahmen haben, welche insbesondere in einer regelmäßigen Reihe, also jeweils mit dem gleichen unveränderlichen ersten Abstand zueinander angeordnet sind. Die ersten Behältnisaufnahmen sind vorzugsweise jeweils so gestaltet, dass die Behältnisse seitlich, das heißt orthogonal zu einer ersten Behältnisachse, welche entlang der mindestens zwei ersten Behältnisaufnahmen verläuft bzw. entlang welcher die Behältnisse in den ersten Behältnisaufnahmen anordbar sind, abgegeben werden können. Die ersten Behältnisaufnahmen sind insbesondere U-förmig ausgebildet, sodass sich eine seitliche Öffnung ergibt, durch welche die Behältnisse abgegeben werden können. Die ersten Behältnisaufnahmen können einen oder mehrere Absätze aufweisen.

Die Annahmehalterung kann auch als Aufnehmer oder Aufnahmeträger bezeichnet werden und hat insbesondere einen Körper, an bzw. in welchem die mindestens zwei zweiten Behältnisaufnahmen angebracht bzw. eingebracht sind. Der Körper kann massiv ausgebildet sein oder neben den zweiten Behältnisaufnahmen beispielsweise Aussparungen zur Gewichtsreduktion aufweisen. Die Annahmehalterung kann einteilig oder mehrteilig ausgebildet sein. Die mindestens zwei zweiten Behältnisaufnahmen sind in einem unveränderlichen zweiten Abstand, welcher insbesondere einem maschinenspezifischen Abstand entspricht, zueinander angeordnet. Die Annahmehalterung kann mehr als zwei zweite Behältnisaufnahmen haben, welche insbesondere in einer regelmäßigen Reihe, also jeweils mit dem gleichen unveränderlichem zweiten Abstand zueinander angeordnet sind. Die zweiten Behältnisaufnahmen sind vorzugsweise jeweils so gestaltet, dass die Behältnisse seitlich, das heißt orthogonal zu einer zweiten Behältnisachse, welche entlang der mindestens zwei zweiten Behältnisaufnahmen verläuft bzw. entlang welcher die Behältnisse in den zweiten Behältnisaufnahmen anordbar sind, angenommen werden können. Die zweiten Behältnisaufnahmen sind insbesondere U-förmig ausgebildet, sodass sich eine seitliche Öffnung ergibt, durch welche die Behältnisse angenommen werden können. Die zweiten Behältnisaufnahmen weisen vorzugsweise eine Fase an bzw. im Bereich der seitlichen Öffnung auf, um die Überführung zu erleichtern. Die zweiten Behältnisaufnahmen können einen oder mehrere Absätze aufweisen.

Unveränderlicher Abstand bedeutet, dass - anders als bei der aus dem Stand der Technik bekannten Lösung mit dem Scherenmechanismus - keine Anpassung des Abstandes zwischen den Behältern an der Abgabehalterung oder der Annahmehalterung erfolgt.

Vorzugsweise sind die ersten Behältnisaufnahmen eingerichtet sind, die Behältnisse jeweils an einem ersten Behältnisabschnitt zu halten, und die zweiten Behältnisaufnahmen eingerichtet sind, die Behältnisse jeweils an einem von dem ersten Behältnisabschnitt unterschiedlichen zweiten Behältnisabschnitt zu halten. Beispielsweise kann vorgesehen sein, dass die Behältnisse von den ersten Behältnisaufnahmen an ihrem Behältnishals und von den zweiten Behältnisaufnahmen an ihrem Behältniskörper gehalten werden, oder umgekehrt.

Das auch als Kulisse bezeichnete passive Überführungselement ist unabhängig von der Abgabehalterung und der Annahmehalterung. Das passive Überführungselement ist - anders als der bekannte Scherenmechanismus - nicht direkt mit der Abgabehalterung oder der Annahmehalterung verbunden. Passiv bedeutet, dass das Überführungselement einen starren Körper hat und jedenfalls keine mit dem bekannten Scherenmechanismus und seinen einzeln bewegbaren Aufnahmeeinheiten vergleichbare Einrichtung darstellt. Das passive Überführungselement kann einteilig oder mehrteilig ausgebildet sein und kann neben dem, vorzugsweise plattenförmigen, Körper eine Befestigungsstruktur umfassen, an welcher der Körper, beispielsweise mittels Schrauben, befestigbar ist. Durch eine solche Ausführung ist das passive Überführungselement in einfacher Weise an unterschiedliche Behältnistypen oder -größen anpassbar, beispielsweise durch Vorhalten von Körpern mit sich voneinander unterscheidenden Dicken. Der Körper des passiven Überführungselements kann massiv ausgebildet sein oder beispielsweise Aussparungen zur Gewichtsreduktion aufweisen. Das passive Überführungselement bzw. dessen Körper ist vorzugsweise aus einem Material hergestellt, welches weicher ist als das Material der Behältnisse, welche in der Regel aus Glas gefertigt sind. Beispielsweise kann das passive Überführungselement aus einem Kunststoff gefertigt sein.

Überführung (oder auch Überführen) bedeutet vorliegend, dass das jeweilige Behältnis durchgehend Kontakt zu wenigstens einer der ersten Behältnisaufnahme und der zweiten Behältnisaufnahme hat. Die Abgabehalterung, insbesondere die ersten Behältnisaufnahmen, und die Annahmehalterung, insbesondere die zweiten Behältnisaufnahmen, sind hierzu entsprechend ausgebildet und für die Überführung zueinander anordbar. Die Überführung wird vorzugsweise dadurch bewirkt, dass die Behältnisse zunächst zur Anlage an dem passiven Überführungselement kommen und während der Überführung an dem passiven Überführungselement anliegen. Bei der Überführung eines Behältnisses ist insbesondere eine erste Behältnisaufnahmen gegenüberliegend von einer zweiten Behältnisaufnahme angeordnet, sodass diese miteinander in Deckung gebracht sind. Die Abgabehalterung und die Annahmehalterung sind bei der Überführung vorzugsweise derart zueinander beabstandet angeordnet, dass zwischen der Abgabehalterung und der Annahmehalterung eine möglichst kleine Lücke vorliegt. Es ist möglich, dass bei einer Draufsicht sich Teile bzw. Abschnitte der Abgabehalterung und der Annahmehalterung überschneiden.

Die Überführung wird durch die lineare Relativbewegung zwischen der Abgabehalterung, der Annahmehalterung und dem passiven Überführungselement ermöglicht. Lineare Relativbewegung bedeutet, dass die Abgabehalterung, die Annahmehalterung sowie das passive Überführungselement relativ zueinander linear bewegbar sind. Eine radiale Relativbewegung kann an der erfindungsgemäßen Vorrichtung prinzipiell vorgesehen sein, ist jedoch nicht für die Überführung der Behältnisse erforderlich. Die Abgabehalterung, die Annahmehalterung sowie das passive Überführungselement sind insbesondere derart relativ zueinander linear bewegbar, dass die Überführung der Behältnisse einzeln nacheinander bewirkbar ist.

Bevorzugt ist, wenn zwischen Abgabehaltung, der Annahmehalterung und dem passiven Überführungselement mindestens zwei unterschiedliche lineare Relativbewegungen entlang eines ersten Bewegungspfades und eines zweiten Bewegungspfades erzeugbar sind.

Besonders bevorzugt ist, wenn der erste Bewegungspfad und der zweite Bewegungspfad kollinear sind.

Der erste Bewegungspfad und der zweite Bewegungspfad bzw. die unterschiedlichen Relativbewegungen sind bevorzugt parallel oder antiparallel.

Die Relativbewegungen werden bevorzugt durch die Bewegung von mindestens zwei der drei Komponenten Abgabehalterung, Annahmehalterung und Überführungselement erzeugt, wobei die dritte Komponente ortsfest angeordnet ist.

Das Antriebssystem umfasst mindestens einen Linearantrieb. Vorzugsweise sind mindestens zwei Linearantriebe vorgesehen. Das Antriebssystem kann ein Getriebe aufweisen. Insbesondere weist das Antriebssystem für den mindestens einen Linearantrieb eine Stromversorgung auf. Die mindestens zwei Linearantriebe sind bevorzugt jeweils dazu ausgebildet eine der drei Komponenten Abgabehalterung, Annahmehalterung und Überführungselement zu bewegen, um damit insgesamt zwei lineare Relativbewegungen zwischen den drei Komponenten Abgabehalterung, Annahmehalterung und Überführungselement zu erzeugen.

Die Vorrichtung ist für unterschiedliche Behältnistypen und -größen, vorzugsweise Vials, Karpulen und/oder Spritze verwendbar. Es sind jedoch auch weitere Behältnistypen und -größen denkbar.

Mit der erfindungsgemäßen Vorrichtung ist eine hohe Flexibilität sowohl zuführseitig bei den verarbeitbaren Packmitteln als auch abfuhrseitig bei den erzeugbaren maschinenspezifischen Abständen möglich. Der für die erfindungsgemäße Vorrichtung benötigte Bauraum ist unabhängig von dem erzeugbaren maschinenspezifischen Abstand. Zudem ist mit der erfindungsgemäßen Vorrichtung eine hohe Ausbringleistung möglich. Die erfindungsgemäße Vorrichtung bietet die Möglichkeit, flexibel und insbesondere unabhängig von dem Verhältnis der Anpassung, den auch als Teilung bezeichneten Abstand zwischen den Behältnissen anzupassen. Ebenfalls lässt sich ein weitestgehend objektschonender Transport ohne Glas zu Glas Kontakt realisieren.

In einer bevorzugten Ausführungsvariante ist das passive Überführungselement ortsfest angeordnet und sind die Abgabehalterung und die Annahmehalterung voneinander unabhängig bewegbar ausgebildet.

Unter ortsfest wird vorliegend verstanden, dass das passive Überführungselement nicht bewegt wird bzw. nicht bewegt werden muss, um die Überführung der Behältnisse zu bewirken.

Die Abgabehalterung ist relativ zu dem passiven Überführungselement und der Annahmehalterung bewegbar ausgebildet. Insbesondere kann die Abgabehalterung relativ zu dem passiven Überführungselement bewegt werden, um die Behältnisse von der Abgabehalterung abzugeben.

Die Annahmehalterung wiederum ist relativ zu dem passiven Überführungselement und der Abgabehalterung bewegbar ausgebildet. Die Annahmehalterung kann insbesondere relativ zu dem passiven Überführungselement bewegt werden, um die Behältnisse in der Annahmehalterung anzunehmen und somit die Überführung zu ermöglichen. Die Annahmehalterung kann weiter insbesondere relativ zu der Abgabehalterung bewegt werden, um eine Differenz zwischen dem ersten Abstand und dem zweiten Abstand (auch Teilungssprung genannt) zu überbrücken und eine erste Behältnisaufnahme mit einer zweiten Behältnisaufnahme in Deckung zu bringen. In diesem Zusammenhang kann vorgesehen sein, dass eine oder mehrere erste Behältnisaufnahme(n) oder eine oder mehrere zweite Behältnisaufnahme(n) zu überspringen, weil diese leer sind oder leer bleiben sollen.

Voneinander unabhängig bewegbar bedeutet, dass durch eine Bewegung der Abgabehalterung nicht zwingend eine Bewegung der Annahmehalterung bedingt wird und umgekehrt, dies allerdings vorgesehen sein kann.

Die Abgabehalterung wird insbesondere von einem ersten Linearantrieb des Antriebssystems bewegt. Die Annahmehalterung wird insbesondere von einem zweiten Linearantrieb des Antriebssystems bewegt. Die Abgabehalterung und/oder die Annahmehalterung kann bei deren Bewegung, beispielsweise durch eine Schiene, geführt sein.

Vorzugsweise ist die Abgabehalterung entlang eines ersten Bewegungspfades bewegbar, wobei der erste Bewegungspfad im Wesentlichen parallel zu der zweiten Behältnisachse verläuft. Die Annahmehalterung ist vorzugsweise entlang eines zweiten Bewegungspfades bewegbar, wobei der zweite Bewegungspfad im Wesentlichen parallel zu der ersten Behältnisachse verläuft. Bevorzugt verläuft der erste Bewegungspfad parallel zu dem zweiten Bewegungspfad. Die ersten Behältnisaufnahmen sind vorzugsweise jeweils so ausgebildet, dass die Behältnisse orthogonal zu dem ersten Bewegungspfad abgegeben werden können. Die zweiten Behältnisaufnahmen sind vorzugsweise jeweils so ausgebildet, dass die Behältnisse orthogonal zu dem zweiten Bewegungspfad angenommen werden können.

In besonders vorteilhafter Weise ist vorgesehen, dass das Antriebssystem eine Steuerungseinheit aufweist, welche dazu eingerichtet ist, die Abgabehalterung und die Annahmehalterung derart anzusteuern, dass diese sich mit voneinander unterscheidenden Geschwindigkeiten bewegen.

Die Steuerungseinheit ist insbesondere ausgebildet, Steuerungsbefehle an den mindestens einen Linearantrieb zu senden, um die Abgabehalterung und/oder Annahmehalterung mit der jeweilig vorgesehenen Geschwindigkeit zu bewegen. Die Steuerungseinheit ist mit dem mindestens einen Linearantrieb vorzugsweise über eine Signalverbindung verbunden.

Die sich voneinander unterscheidenden Geschwindigkeiten, mit denen sich die Abgabehalterung und die Annahmehalterung bewegen, sowie die jeweilige Relativgeschwindigkeit zu dem ortsfest angeordneten passiven Überführungselement sind für die Genauigkeit bei der Überführung der Behältnisse von der Abgabehalterung zu der Annahmehalterung von Bedeutung.

Der Unterschied zwischen der Geschwindigkeit der Abgabehalterung und der Geschwindigkeit der Annahmehalterung kann derart sein, dass mit diesem sowohl die Differenz zwischen dem ersten Abstand und dem zweiten Abstand überbrückt werden kann, um eine erste Behältnisaufnahme mit einer zweiten Behältnisaufnahme in Deckung zu bringen, als auch eine reibungslose Überführung des jeweiligen Behältnisses möglich ist. An der zweiten Behältnisaufnahme bzw. deren seitlichen Öffnung kann eine Fase vorgesehen sein, die berücksichtigt, dass sich bei Beginn der Überführung die erste Behältnisaufnahme und die zweite Behältnisaufnahme noch nicht genau in Deckung befinden können.

Alternativ kann vorgesehen sein, dass die Annahmehalterung und/oder die Abgabehalterung derart angesteuert wird, dass diese sich mit zwei unterschiedlichen Geschwindigkeiten bewegt. Dann kann die Annahmehalterung oder die Abgabehalterung beispielsweise zwischen zwei Überführungen von Behältnissen, um die Differenz zwischen dem ersten Abstand und dem zweiten Abstand zu überbrücken und eine erste Aufnahmeposition und eine zweite Aufnahmeposition in Deckung zu bringen, mit einer Geschwindigkeit bewegt werden, welche sich von der Geschwindigkeit bei der Überführung unterscheidet und vorzugsweise größer ist.

Eine Überbrückung der Differenz zwischen dem ersten Abstand und dem zweiten Abstand kann alternativ dadurch bewirkt werden, dass die Abgabehalterung oder die Annahmehalterung angehalten wird und die jeweils andere der Abgabehalterung und Annahmehalterung, insbesondere mit derselben Geschwindigkeit wie bei der Überführung, weiter bewegt wird. Für eine Überführung kann die Geschwindigkeit der Abgabehalterung nahezu gleich der Geschwindigkeit der Annahmehalterung sein. Bei der Überführung werden die Abgabehalterung und die Annahmehalterung vorzugsweise synchron bewegt. Die Geschwindigkeit ist jeweils in einem Bereich, in dem die Behältnisse möglichst schonend überführt werden können.

In einer weiteren bevorzugten Ausführungsvariante ist die Abgabehalterung oder die Annahmehalterung ortsfest angeordnet ist und das passive Überführungselement sowie die jeweils andere der Abgabehalterung und Annahmehalterung voneinander unabhängig bewegbar ausgebildet sind.

Die Ausgestaltungsmerkmale der Ausführungsvariante mit dem ortsfesten passiven Überführungselement sind auf diese Ausführungsvariante anwendbar und übertragbar, sofern sie nicht widersprüchlich zu den nachfolgend beschriebenen Ausgestaltungsmerkmalen sind.

Es kann vorgesehen sein, dass die Annahmehalterung ortsfest angeordnet ist und das passive Überführungselement und die Abgabehalterung bewegbar ausgebildet sind. Alternativ kann vorgesehen sein, dass die Abgabehalterung ortsfest angeordnet ist und das passive Überführungselement und die Annahmehalterung bewegbar ausgebildet sind. Ob die Abgabehalterung oder die Annahmehalterung ortsfest angeordnet ist, kann beispielsweise von dem für die Vorrichtung verfügbaren Bauraum abhängig sein. Unter ortsfest wird auch hier verstanden, dass Abgabehalterung bzw. die Annahmehalterung nicht bewegt wird bzw. nicht bewegt werden muss, um die Überführung der Behältnisse zu bewirken.

Wenn die Annahmehalterung ortsfest angeordnet ist, ist die Abgabehalterung relativ zu dem passiven Überführungselement und der Annahmehalterung bewegbar. Die Abgabehalterung kann insbesondere relativ zu der Annahmehalterung bewegt werden, um die Differenz zwischen dem ersten Abstand und dem zweiten Abstand zu überbrücken und eine erste Aufnahmeposition und eine zweite Aufnahmeposition in Deckung zu bringen. Das passive Überführungselement ist wiederum relativ zu der Annahmehalterung und der Abgabehalterung bewegbar. Insbesondere kann das passive Überführungselement relativ zu der Abgabehalterung bewegt werden, um die Behältnisse von der Abgabehalterung abzugeben. Es kann vorgesehen sein, dass das passive Überführungselement und die Abgabehalterung in entgegengesetzte Richtungen zueinander bewegt werden. Voneinander unabhängig bewegbar bedeutet, dass durch eine Bewegung der Abgabehalterung nicht zwingend eine Bewegung des passiven Überführungselements bedingt wird und umgekehrt, dies allerdings vorgesehen sein kann.

Wenn die Abgabehalterung ortsfest angeordnet ist, ist die Annahmehalterung relativ zu dem passiven Überführungselement und der Abgabehalterung bewegbar. Die Annahmehalterung kann insbesondere relativ zu der Abgabehalterung bewegt werden, um die Differenz zwischen dem ersten Abstand und dem zweiten Abstand zu überbrücken und eine erste Aufnahmeposition und eine zweite Aufnahmeposition in Deckung zu bringen. Das passive Überführungselement ist wiederum relativ zu der Annahmehalterung und der Abgabehalterung bewegbar. Insbesondere kann das passive Überführungselement relativ zu der Abgabehalterung bewegt werden, um die Behältnisse von der Abgabehalterung abzugeben. Es kann vorgesehen sein, dass das passive Überführungselement und die Annahmehalterung in entgegengesetzte Richtungen zueinander bewegt werden. Voneinander unabhängig bewegbar bedeutet, dass durch eine Bewegung der Annahmehalterung nicht zwingend eine Bewegung des passiven Überführungselements bedingt wird und umgekehrt, dies allerdings vorgesehen sein kann.

Das passive Überführungselement wird insbesondere von einem dritten Linearantrieb des Antriebssystems bewegt. Vorzugsweise ist die oben beschriebene Befestigungsstruktur des passiven Überführungselements mit dem Linearantrieb verbunden. Das passive Überführungselement kann bei dessen Bewegung, beispielsweise durch eine Schiene, geführt sein.

Vorzugsweise ist das passive Überführungselement entlang eines dritten Bewegungspfades bewegbar, wobei der dritte Bewegungspfad insbesondere im Wesentlichen parallel zu der ersten Behältnisachse und/oder der zweiten Behältnisachse verläuft. Bevorzugt verläuft der dritte Bewegungspfad parallel zu dem ersten Bewegungspfad und/oder dem zweiten Bewegungspfad.

Selbstverständlich ist auch eine Ausführungsvariante der Vorrichtung denkbar, bei der das passive Überführungselement, die Abgabehalterung und die Annahmehalterung voneinander unabhängig bewegbar ausgebildet sind.

In besonders vorteilhafter Weise ist vorgesehen, dass das Antriebssystem eine Steuerungseinheit aufweist, welche dazu eingerichtet ist, das Überführungselement und die Abgabehalterung beziehungsweise die Annahmehalterung derart anzusteuern, dass diese sich mit voneinander unterscheidenden Geschwindigkeiten bewegen.

Die Steuerungseinheit ist insbesondere ausgebildet, Steuerungsbefehle an den mindestens einen Linearantrieb zu senden, um das passive Überführungselement mit der vorgesehenen Geschwindigkeit zu bewegen. Die Steuerungseinheit ist dazu mit dem mindestens einen Linearantrieb vorzugsweise über eine Signalverbindung verbunden.

Wenn die Annahmehalterung ortsfest ist, kann die Steuerungseinheit das passive Überführungselement insbesondere derart ansteuern, dass sich dessen Geschwindigkeit von derjenigen der Abgabehalterung unterscheidet. Wie oben beschrieben, können alternativ oder zusätzlich die Abgabehalterung und das passive Überführungselement derart angesteuert werden, dass sich diese in entgegengesetzte Richtungen bewegen. Insbesondere können die Abgabehalterung und das passive Überführungselement mit voneinander unterscheidenden Geschwindigkeiten bewegt werden, um eine Überführung eines Behältnisses zu bewirken. Es kann vorgesehen sein, dass das passive Überführungselement und/oder die Abgabehalterung derart angesteuert wird, dass diese(s) sich mit zwei unterschiedlichen Geschwindigkeiten bewegt. So kann, wie bereits zuvor beschrieben, die Differenz zwischen dem ersten Abstand und dem zweiten Abstand mit einer anderen Geschwindigkeit überbrückt werden als mit derjenigen Geschwindigkeit, bei welcher die Überführung bewirkt wird.

Wenn die Abgabehalterung ortsfest ist, kann die Steuerungseinheit das passive Überführungselement insbesondere derart ansteuern, dass sich dessen Geschwindigkeit von derjenigen der Annahmehalterung unterscheidet. Wie oben beschrieben, können alternativ oder zusätzlich die Annahmehalterung und das passive Überführungselement derart angesteuert werden, dass sich diese in entgegengesetzte Richtungen bewegen. Insbesondere kann das passive Überführungselement zur Bewirkung der Überführung mit einer Geschwindigkeit bewegen, welche sich von derjenigen Geschwindigkeit unterscheidet, mit welcher sich die Annahmehalterung, um die Differenz zwischen dem ersten Abstand und dem zweiten Abstand zu überbrücken. Es kann vorgesehen sein, dass das passive Überführungselement und/oder die Annahmehalterung derart angesteuert wird, dass diese(s) sich mit zwei unterschiedlichen Geschwindigkeiten bewegt. So kann, wie bereits zuvor beschrieben, die Differenz zwischen dem ersten Abstand und dem zweiten Abstand mit einer anderen Geschwindigkeit überbrückt werden als mit derjenigen Geschwindigkeit, bei welcher die Überführung bewirkt wird.

In einer bevorzugten Ausführungsvariante weist das passive Überführungselement einen rampenförmigen Abschnitt auf, mittels welchem die Überführung der Behältnisse bewirkbar ist.

Der rampenförmige Abschnitt ist insbesondere an einer Stirnfläche des passiven Überführungselements, vorzugsweise dessen Körper, angeordnet, welche der Annahmehalterung bzw. deren zweitem Bewegungspfad zugewandt ist. Der rampenförmige Abschnitt liegt insbesondere zwischen zwei weiteren Abschnitten, welche im Wesentlichen parallel zueinander und vorzugsweise im Wesentlichen parallel zu dem ersten Bewegungspfad und/oder zu dem zweiten Bewegungspfad verlaufen. Das passive Überführungselement, insbesondere dessen Stirnfläche, hat vorzugsweise eine Z-förmige Kontur. Das passive Überführungselement kann aufgrund einer solchen Ausbildung auch als Kurvenkulisse bezeichnet werden bzw als Kurvenkulisse ausgeführt sein. Der rampenförmige Abschnitt kann eine sich über dessen Länge verändernde Steigung aufweisen. Insbesondere sind diejenigen Übergangsbereiche, an denen der rampenförmige Abschnitt jeweils an einen der weiteren Abschnitte grenzt, mit einem Gradienten für einen "weichen" Übergang versehen. In den Übergangsbereichen kann ein Radius vorgesehen sein.

In vorteilhafter Weise kann vorgesehen sein, dass die Vorrichtung eine mit dem passiven Überführungselement koppelbare Schiebeeinrichtung aufweist, wobei das Antriebssystem dazu eingerichtet ist, eine lineare Relativbewegung zwischen der Schiebeeinrichtung und dem passiven Überführungselement zu erzeugen.

Die Schiebeeinrichtung ist vorzugsweise unabhängig von dem passiven Überführungselement bewegbar ausgebildet. Die Schiebeeinrichtung kann mit einer Geschwindigkeit bewegt werden, welche sich von einer Geschwindigkeit, mit welcher das passive Überführungselement bewegt wird, unterscheidet, wobei die Schiebeeinrichtung oder das passive Überführungselement auch stehen bleiben kann. Alternativ kann vorgesehen sein, dass das passive Überführungselement ortsfest angeordnet ist und die Schiebeeinrichtung bewegbar ausgebildet ist oder umgekehrt.

Koppelbar bedeutet, dass die Schiebeeinrichtung nicht dauerhaft mit dem passiven Überführungselement gekoppelt sein muss, sondern, beispielsweise lediglich für die Überführung der Behältnisse, mit dem passiven Überführungselement gekoppelt werden kann.

In einer bevorzugten Ausführungsvariante weist die Schiebeeinrichtung einen zur Überführung der Behältnisse eingerichteten Stift sowie eine an dem Stift angebrachte und sich an dem passiven Überführungselement abstützende und daran geführte Rolle auf, sodass der Stift durch eine Kontur des passiven Überführungselements bewegbar ist.

Die Kontur, durch die der Stift bewegbar ist, ist insbesondere durch die oben beschriebene Stirnfläche des Überführungselements und bevorzugt durch den rampenförmigen Abschnitt gebildet. Die Überführung wird vorzugsweise dann bewirkt, wenn die Rolle an dem rampenförmigen Abschnitt gestützt wird und sich der Stift insbesondere senkrecht zu dem ersten und/oder zweiten und/oder dritten Bewegungspfad bewegt.

Durch Vorsehen einer solchen Schiebeeinrichtung kann ein Reibkontakt zwischen den Behältnissen und dem passiven Überführungselement vermieden werden.

In einer bevorzugten Ausführungsform ist an mindestens einer der ersten Behältnisaufnahmen und/oder zweiten Behältnisaufnahmen ein, vorzugsweise als Clip-Element ausgebildetes, Halteelement zum passiven Halten der Behältnisse oder eine, vorzugsweise als Saug- und/oder Greifeinrichtung ausgebildete, Halteeinrichtung zum aktiven Halten der Behältnisse vorgesehen.

Das Halteelement bzw. die Halteeinrichtung ermöglicht es, durch das passive bzw. aktive Halten die Behältnisse vor und/oder nach der Überführung an der Abgabehalterung oder der Annahmehalterung zu sichern. Ein solches Sichern dient insbesondere dazu, dass die Behältnisse nicht aus der Abgabehalterung und/oder Annahmehalterung fallen können, wenn das passive Überführungselement oder die jeweils andere der Abgabehalterung und Annahmehalterung nicht gegenüberliegend der ersten Behältnisaufnahme oder zweiten Behältnisaufnahme angeordnet ist.

Das Clip-Element hat vorzugsweise einen bogenförmigen und biegsamen Steg, welcher das Behältnis teilweise umschließt, wenn dieses in der ersten Behältnisaufnahme oder zweiten Behältnisaufnahme angeordnet ist. An dem freien Ende des Stegs kann eine Einführhilfe vorgesehen sein, damit der Steg insbesondere bei der Überführung eines Behältnisses durch dieses weggebogen wird, um in die jeweilige zweite Behältnisaufnahme zu gelangen.

Mit einer Saug- und/oder Greifeinrichtung können die in der Abgabehalterung und/oder Annahmehalterung angeordneten Behältnisse vor bzw. nach einer Überführung angesaugt und/oder gegriffen werden. Es kann vorgesehen sein, dass das Behältnis während der Überführung angesaugt und/oder gegriffen wird, sodass das aktive Halten unterstützend bei der Überführung wirken kann.

Alternativ kann die erste Behältnisaufnahme und/oder die zweite Behältnisaufnahme eine derartige Form aufweisen, dass die Behältnisse darin passiv gesichert sind. Insbesondere ist eine Bodenführung denkbar, welche das Behältnis an dessen Behältnisboden von unten stützt.

Des Weiteren soll hier beschrieben werden eine Füllmaschine mit einer erfindungsgemäßen Vorrichtung.

Es soll darauf hingewiesen werden, dass die im Zusammenhang mit der vorstehend beschriebenen Vorrichtung geschilderten besonderen Vorteile und Ausgestaltungsmerkmale auch auf die beschriebene Füllmaschine anwendbar und übertragbar sind.

Die Füllmaschine ist vorzugsweise zum Befüllen der Behältnisse mit einem, insbesondere flüssigen, pharmazeutischen Produkt oder einem Lebensmittelprodukt vorgesehen. Zum Befüllen der Behältnisse hat die Füllmaschine insbesondere eine Befülleinheit, welche an einer Befüllstation der Füllmaschine vorgesehen sein kann. Die Befülleinheit weist insbesondere mehrere Befüllelemente auf, welche vorzugsweise in einer Reihe nebeneinander mit dem zweiten Abstand angeordnet sind, und kann beispielsweise an einem freien Ende eines Roboterarms angebracht sein. Die Füllmaschine kann für ein dem Befüllen nachgeschaltetes Verschließen der befüllten Behältnisse verwendet werden. Eine dafür vorgesehene Verschließeinheit weist insbesondere mehrere Verschließelemente auf, welche vorzugsweise in einer Reihe nebeneinander mit dem zweiten Abstand angeordnet sind, und kann beispielsweise an einem freien Ende eines Roboterarms angebracht sein.

Die Vorrichtung wird in der Füllmaschine genutzt, in einem Packmittel mit einem ersten Abstand gelagerte Behältnisse vor deren Befüllen in den dafür optimalen zweiten Abstand zueinander zu bringen. Vorzugsweise werden die Behältnisse reihenweise aus dem Packmittel entnommen und in die Abgabehalterung eingesetzt. Hierfür kann die Füllmaschine einen Manipulator aufweisen, welcher die Behältnisse beispielsweise an ihrem Kopf ansaugt bzw. greift.

Die Steuerungseinheit der erfindungsgemäßen Vorrichtung kann eine übergeordnete Steuerungseinheit der Füllmaschine oder zumindest darin eingebettet sein.

Alternativ oder zusätzlich zu einer Verwendung in der Füllmaschine kann die Vorrichtung für eine Vor- und/oder Nachverarbeitung, also vor und/oder nach der Verarbeitung in der Füllmaschine, vorgesehen sein. Beispielsweise ist die Vorrichtung in einem sogenannten "Renester" verwendbar, in welchem befüllte und verschlossene Behältnisse wieder in das Packmittel eingesetzt werden. Es ist zudem denkbar, die Vorrichtung in anderen Maschinen bzw. bei anderen Prozessen zu verwenden.

Außerdem wird hier beschrieben ein Verfahren zum Betreiben einer erfindungsgemäßen Vorrichtung, aufweisend die folgenden Schritte:
a) lineares Bewegen der Annahmehalterung relativ zu der Abgabehalterung und dem passiven Überführungselement oder lineares Bewegen der Abgabehalterung und des passiven Überführungselements relativ zu der Annahmehalterung, um eine Differenz zwischen dem ersten Abstand und dem zweiten Abstand zu überbrücken und eine erste Behältnisaufnahme mit einer zweiten Behältnisaufnahme in Deckung zu bringen,
b) synchrones lineares Bewegen der Annahmehalterung und der Abgabehalterung relativ zu dem passiven Überführungselement oder lineares Bewegen des passiven Überführungselements relativ zu der Abgabehalterung und der Annahmehalterung, um die Überführung mindestens eines Behältnisses zu bewirken.

Es soll darauf hingewiesen werden, dass die im Zusammenhang mit der vorstehend beschriebenen Vorrichtung sowie der vorstehend beschriebenen Füllmaschine geschilderten besonderen Vorteile und Ausgestaltungsmerkmale auch auf das beschriebene Verfahren anwendbar und übertragbar sind.

Die Schritte a) und b) können abwechselnd wiederholt werden, insbesondere bis alle Behältnisse von der Abgabehalterung zu der Annahmehalterung überführt sind.

**In** besonders vorteilhafter Weise wird die Annahmehalterung mit zwei Geschwindigkeiten und die Abgabehalterung und das passive Überführungselement jeweils mit lediglich einer Geschwindigkeit oder die Abgabehalterung und das passive Überführungselement jeweils mit zwei Geschwindigkeiten und die Annahmehalterung mit lediglich einer Geschwindigkeit bewegt.

Aufgrund der zwei Geschwindigkeiten kann, wie oben beschrieben, beispielsweise die Differenz zwischen dem ersten Abstand und dem zweiten Abstand mit einer höheren Geschwindigkeit überbrückt werden als die Geschwindigkeit bei der Überführung. Hierdurch kann das in Deckung bringen einer ersten Behältnisaufnahme und einer zweiten Behältnisaufnahme möglichst zeiteffizient und die Überführung möglichst schonend für die Behältnisse durchgeführt werden.

Die Erfindung sowie das technische Umfeld der Erfindung werden nachfolgend anhand der Figuren näher erläutert. Die Figuren zeigen ein bevorzugtes Ausführungsbeispiel, auf welche die Erfindung nicht beschränkt ist. Es ist darauf hinzuweisen, dass die Figuren und die in den Figuren dargestellten Größenverhältnisse nur schematisch sind. Es zeigen beispielhaft und schematisch:
Fig. 1: eine perspektivische Darstellung der beschriebenen Vorrichtung in einer ersten Ausführungsvariante;
Fig. 2: eine Draufsicht der in der Fig. 1 gezeigten Vorrichtung zu einem ersten Zeitpunkt einer Überführung;
Fig. 3: eine Draufsicht der in der Fig. 1 gezeigten Vorrichtung zu einem zweiten Zeitpunkt der Überführung;
Fig. 4: eine perspektivische Darstellung der beschriebenen Vorrichtung in einer zweiten Ausführungsvariante;
Fig. 5: eine perspektivische Darstellung der beschriebenen Vorrichtung in einer dritten Ausführungsvariante; und
Fig. 6: eine Draufsicht der beschriebenen Vorrichtung in einer vierten Ausführungsvariante.

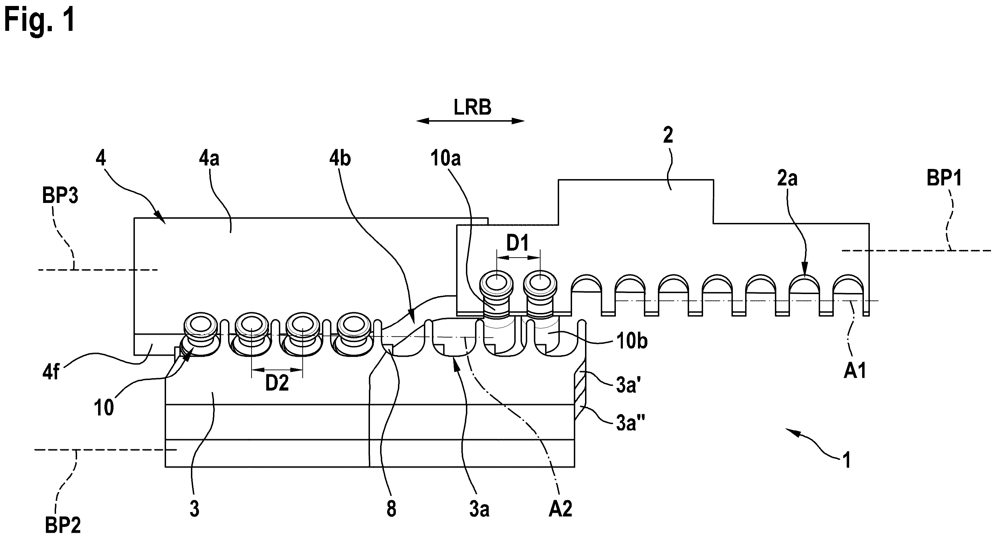

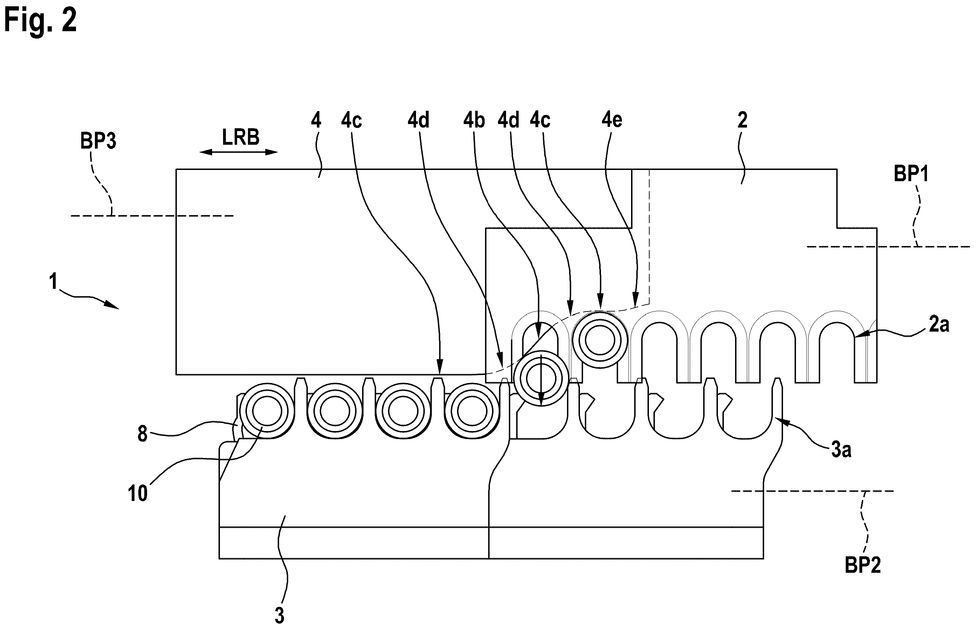

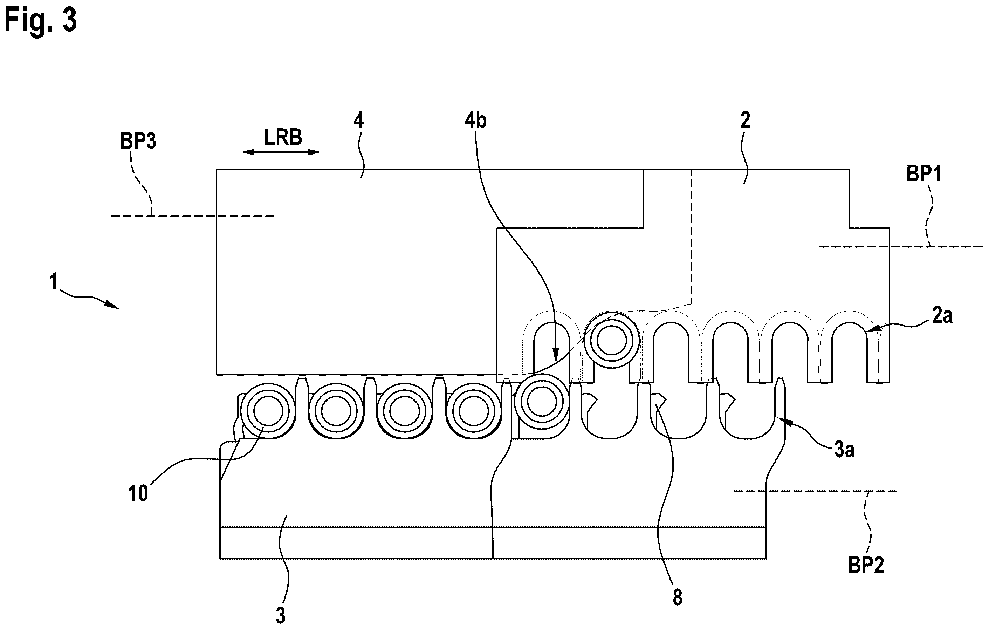

Die Fig. 1 zeigt eine perspektivische Darstellung der beschriebenen Vorrichtung 1 in einer ersten Ausführungsvariante. Die Fig. 2 zeigt eine Draufsicht der in der Fig. 1 gezeigten Vorrichtung 1 zu einem ersten Zeitpunkt einer Überführung. Die Fig. 3 zeigt eine Draufsicht der in der Fig. 1 gezeigten Vorrichtung 1 zu einem zweiten Zeitpunkt der Überführung.

Die Vorrichtung 1 ist insbesondere in einer Füllmaschine angeordnet und dient dazu, einen (Teilungs-)Abstand zwischen Behältnissen 10 anzupassen. Die Vorrichtung 1 weist eine Abgabehalterung 2, eine Annahmehalterung 3 und ein passives Überführungselement 4 auf.

Die Abgabehalterung 2 hat mehrere erste Behältnisaufnahmen 2a, an denen Behältnisse 10 gehalten werden können. Die ersten Behältnisaufnahmen 2a sind in einer regelmäßigen Reihe jeweils mit einem unveränderlichen ersten Abstand D1 zueinander angeordnet und halten das Behältnis 10 jeweils an einem Behältnishals 10a. Die ersten Behältnisaufnahmen 2a sind U-förmig ausgebildet, sodass sich eine seitliche Öffnung ergibt, über welche die Behältnisse 10 bei einer Überführung abgegeben werden können. Die ersten Behältnisaufnahmen 2a sind jeweils derart ausgebildet, dass die Behältnisse 10 senkrecht zu einer ersten Behältnisachse A1, welche entlang der ersten Behältnisaufnahmen 2a verläuft, abgebbar sind. Die ersten Behältnisaufnahmen 2a weisen einen Absatz 2b auf, sodass das Behältnis 10 an seinem Behältnishals 10a gehalten werden kann, ohne dass die Behältnisaufnahme 2b mit einem Behältniskörper 10b kollidiert.

Die Annahmehalterung 3 hat mehrere zweite Behältnisaufnahmen 3a, an denen Behältnisse 10 gehalten werden können. Die zweiten Behältnisaufnahmen 3a sind in einer regelmäßigen Reihe jeweils mit einem unveränderlichen zweiten Abstand D2 zueinander angeordnet und halten das Behältnis 10 an einem Behältniskörper 10b. Die zweiten Behältnisaufnahmen 3a weisen jeweils einen oberen Teil 3a' und einen unteren Teil 3a" auf, die den Behältniskörper 10b oben und unten halten. Die zweiten Behältnisaufnahmen 3a sind U-förmig ausgebildet, sodass sich eine seitliche Öffnung ergibt, über welche die Behältnisse 10 bei einer Überführung angenommen werden können. Die zweiten Behältnisaufnahmen 3a sind jeweils derart ausgebildet, dass die Behältnisse 10 senkrecht zu einer zweiten Behältnisachse A2, welche entlang der zweiten Behältnisaufnahmen 3a verläuft, annehmbar sind. An der zweiten Behältnisaufnahme 3a ist jeweils ein optionales Halteelement 8 angebracht, mit welchem das Behältnis 10 in der zweiten Behältnisaufnahme 3a gesichert werden kann.

Das passive Überführungselement 4 hat einen Körper 4a, welcher an einer Stirnfläche 4f einen rampenförmigen Abschnitt 4b aufweist. Der rampenförmige Abschnitt 4b kann die Überführung der Behältnisse 10 von der Abgabehalterung 2 zu der Annahmehalterung 3, das heißt von den ersten Behältnisaufnahmen 2a zu den zweiten Behältnisaufnahmen 3a, bewirken. Wie in der Fig. 2 zu sehen ist, liegt der rampenförmige Abschnitt 4b zwischen zwei weiteren Abschnitten 4c, welche im Wesentlichen parallel zueinander verlaufen. Die Stirnfläche 4f hat dadurch eine Z-förmige Kontur. Der rampenförmige Abschnitt 4b hat eine sich über dessen Länge verändernde Steigung mit Übergangsbereichen 4d, an denen der rampenförmige Abschnitt 4b jeweils an einen der weiteren Abschnitte 4c grenzt. Diese Übergangsbereiche 4d weisen einen Gradienten für einen "weichen" Übergang auf. Das passive Überführungselement 4 hat eine Fase 4e, wodurch eine schonende "Einfädelung" in den Kontakt zwischen dem Behältnis 10 und dem passiven Überführungselement 4 ermöglicht wird.

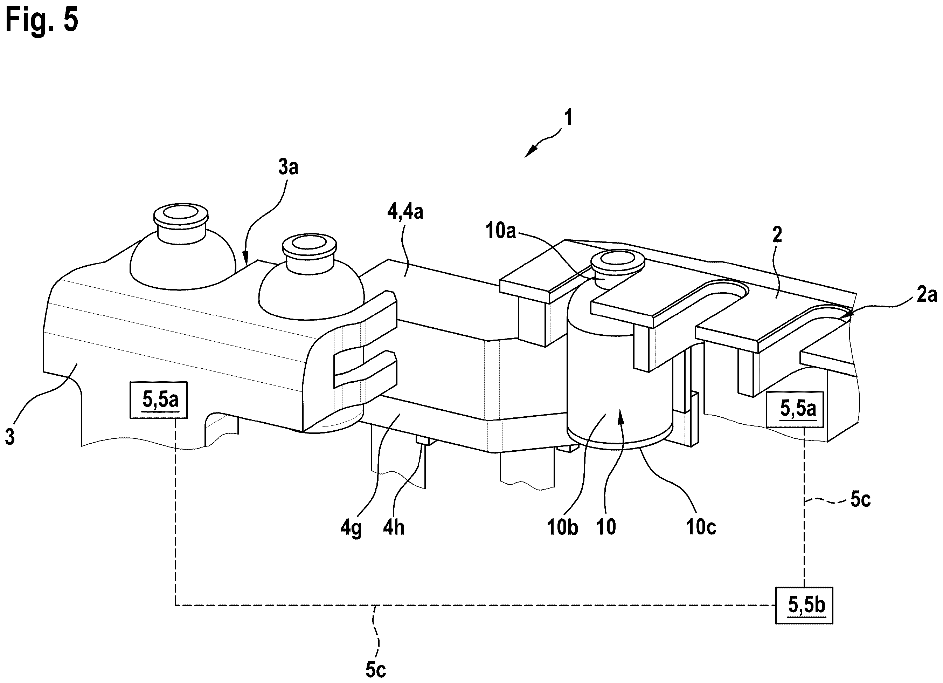

Ein nicht dargestelltes Antriebssystem 5 (vgl. Fig. 5) der Vorrichtung 1 ist dazu eingerichtet, eine lineare Relativbewegung LRB zwischen der Abgabehalterung 2, der Annahmehalterung 3 und dem passiven Überführungselement 4 zu erzeugen.

Die Überführung des vordersten, dem passiven Überführungselement 4 zugewandten, Behältnisses 10 kann auf unterschiedliche Weise herbeigeführt werden. Beispielsweise kann das passive Überführungselement 4 ortsfest angeordnet sein und die Abgabehalterung 2 sowie die Annahmehalterung 3 voneinander unabhängig bewegbar ausgebildet sein. Insbesondere kann dann die Abgabehalterung 2 relativ zu dem passiven Überführungselement 4 bewegt werden, um die Behältnisse 10 von der Abgabehalterung 2 abzugeben. Die Annahmehalterung 3 kann dann insbesondere relativ zu dem passiven Überführungselement 4 bewegt werden, um die Behältnisse 10 in der Annahmehalterung 3 anzunehmen und somit die Überführung zu ermöglichen. Die Annahmehalterung 3 kann weiter insbesondere relativ zu der Abgabehalterung 2 bewegt werden, um eine Differenz zwischen dem ersten Abstand D1 und dem zweiten Abstand D2 zu überbrücken und eine erste Behältnisaufnahme 2a mit einer zweiten Behältnisaufnahme 3a in Deckung zu bringen.

Alternativ kann die Abgabehalterung 2 oder die Annahmehalterung 3 ortsfest angeordnet sein und das passive Überführungselement 4 sowie die jeweils andere der Abgabehalterung 2 und Annahmehalterung 3 voneinander unabhängig bewegbar ausgebildet sein. Wenn die Annahmehalterung 3 ortsfest angeordnet ist, kann die Abgabehalterung 2 dann insbesondere relativ zu der Annahmehalterung 3 bewegt werden, um die Differenz zwischen dem ersten Abstand D1 und dem zweiten Abstand D2 zu überbrücken und eine erste Aufnahmeposition 2a und eine zweite Aufnahmeposition 3a in Deckung zu bringen. Das passive Überführungselement 4 kann dann insbesondere relativ zu der Abgabehalterung 2 bewegt werden, um die Behältnisse 10 von der Abgabehalterung 2 abzugeben. Wenn die Abgabehalterung 2 ortsfest angeordnet ist, kann die Annahmehalterung 3 dann insbesondere relativ zu der Abgabehalterung 2 bewegt werden, um die Differenz zwischen dem ersten Abstand D1 und dem zweiten Abstand D2 zu überbrücken und eine erste Aufnahmeposition 2a und eine zweite Aufnahmeposition 3a in Deckung zu bringen. Das passive Überführungselement 4 kann dann insbesondere relativ zu der Abgabehalterung 2 bewegt werden, um die Behältnisse 10 von der Abgabehalterung 2 abzugeben.

Sofern die Abgabehalterung 2 bewegbar ausgebildet ist, ist diese entlang eines ersten Bewegungspfades BP1 bewegbar, wobei der erste Bewegungspfad BP1 im Wesentlichen parallel zu der zweiten Behältnisachse A2 verläuft. Sofern die Annahmehalterung 3 bewegbar ausgebildet ist, ist diese entlang eines zweiten Bewegungspfades BP2 bewegbar, wobei der zweite Bewegungspfad BP2 im Wesentlichen parallel zu der ersten Behältnisachse A1 und zum ersten Bewegungspfad BP1 verläuft. Sofern das passive Überführungselement 4 bewegbar ausgebildet ist, ist dieses entlang eines dritten Bewegungspfades BP3 bewegbar, wobei der dritte Bewegungspfad BP3 im Wesentlichen parallel zu der ersten Behältnisachse A1 und der zweiten Behältnisachse A2 sowie parallel zu dem ersten Bewegungspfad BP1 und dem zweiten Bewegungspfad BP2 verläuft.

Für die Überführung wird durch die lineare Relativbewegung LRB zunächst das passive Überführungselement 4 an die Abgabehalterung 2 oder die Abgabehalterung 2 an das passive Überführungselement 4 heran bewegt, bis das vorderste Behältnis 10 an dem passiven Überführungselement 4 bzw. dessen rampenförmigen Abschnitt 4b anliegt. Dadurch, dass sich das passive Überführungselement 4 weiter relativ zu der Abgabehalterung 2 bewegt, wird die Überführung des Behältnisses 10 bewirkt.

An dem in der Fig. 2 gezeigten Zeitpunkt ist das vorderste Behältnis 10 bereits teilweise aus der ersten Behältnisaufnahme 2a abgegeben und bereits teilweise von der zweiten Behältnisaufnahme 3a angenommen. Zu diesem Zeitpunkt ist das nächste Behältnis 10 bereits zur Anlage an dem passiven Überführungselements 4 gekommen.

An dem in der Fig. 3 gezeigten Zeitpunkt ist die Überführung des vordersten Behältnisses 10 nahezu abgeschlossen. Das nächste Behältnis 10 liegt zu diesem Zeitpunkt an dem rampenförmigen Abschnitt 4b des passiven Überführungselements 4 an.

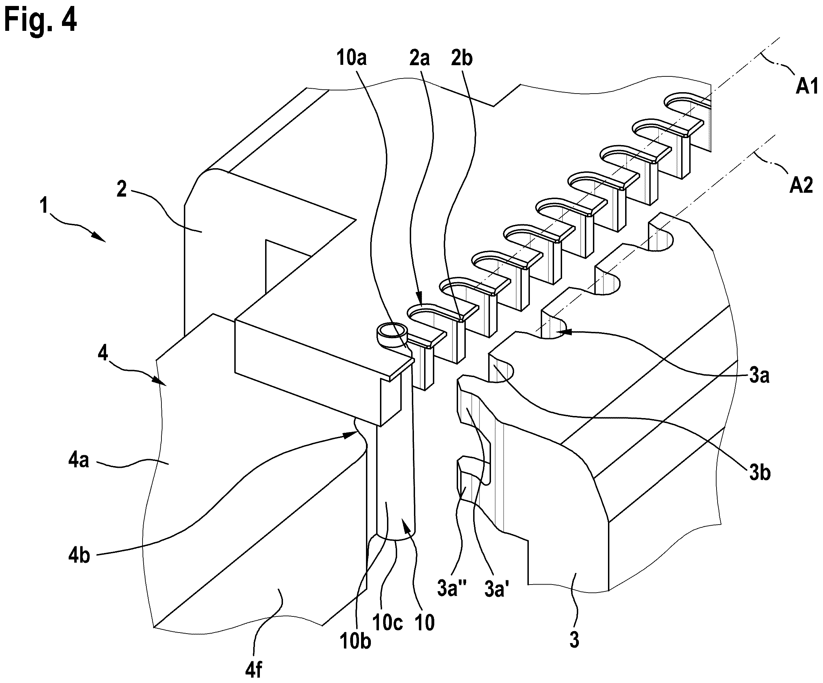

Die Fig. 4 zeigt eine perspektivische Darstellung der beschriebenen Vorrichtung 1 in einer zweiten Ausführungsvariante. Im Vergleich zu der in den Fig. 1 bis 3 gezeigten ersten Ausführungsvariante haben die Behältnisse 10 eine längliche Form und sind insbesondere Karpulen. Bei der hier gezeigten zweiten Ausführungsvariante ist das passive Überführungselement 4 dicker als bei der ersten Ausführungsvariante ausgebildet.

Die Fig. 5 zeigt eine perspektivische Darstellung der beschriebenen Vorrichtung 1 in einer dritten Ausführungsvariante.

Bei der hier gezeigten dritten Ausführungsvariante ist das passive Überführungselement 4 hat das passive Überführungselement 4 eine Befestigungsstruktur 4g, an welcher der Körper 4a des passiven Überführungselements 4 mit Schrauben 4h befestigt ist. Hierdurch ist der Körper 4a auswechselbar und damit die Vorrichtung 1 für weitere Behältnistypen und/oder -größen umrüstbar.

Die Vorrichtung 1 weist zudem ein Antriebssystem 5 auf, welches dazu eingerichtet ist, eine lineare Relativbewegung LRB zwischen der Abgabehalterung 2, der Annahmehalterung 3 und dem passiven Überführungselement 4 zu erzeugen. Das Antriebssystem 5 umfasst vorliegend zwei Linearantriebe 5a und hat eine Steuerungseinheit 5b. Die Steuerungseinheit 5b ist jeweils über eine Signalverbindung 5c mit einem der Linearantriebe 5a verbunden, sodass die Steuerungseinheit 5b die Linearantriebe 5a ansteuern kann. Vorliegend sind die Abgabehalterung 2 und die Annahmehalterung 3 jeweils mittels des Linearantriebs 5a bewegbar ausgebildet. Wie zuvor beschrieben, sind andere Ausführungsvarianten, bei denen beispielsweise das passive Überführungselement 4 bewegbar ausgebildet ist, ebenso denkbar.

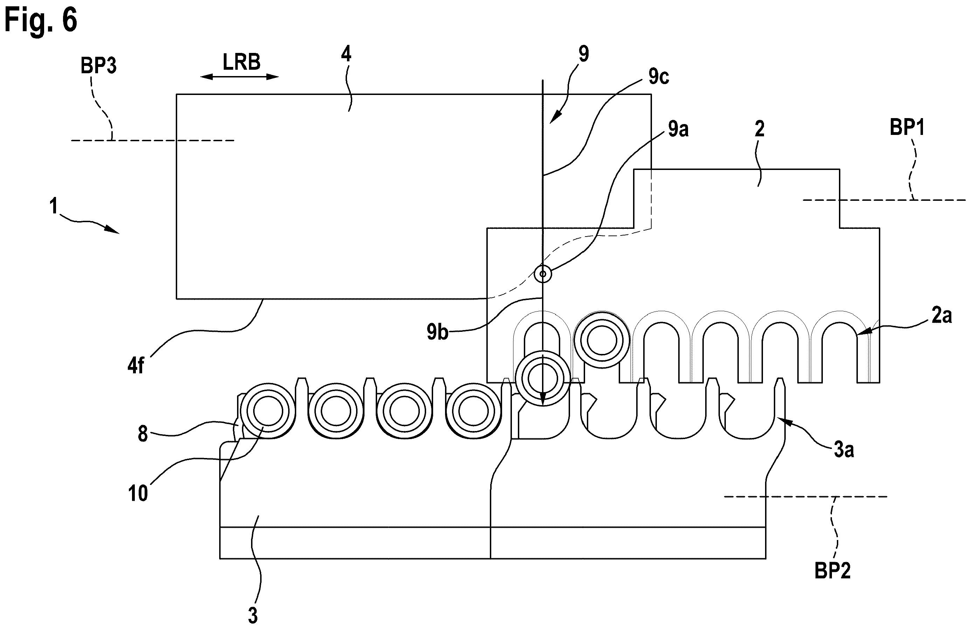

Die Fig. 6 zeigt eine Draufsicht der beschriebenen Vorrichtung 1 in einer vierten Ausführungsvariante. Bei dieser vierten Ausführungsvariante umfasst die Vorrichtung 1 eine Schiebeeinrichtung 9, welche mit dem passiven Überführungselement 4 koppelbar ist. Die Schiebeeinrichtung 9 weist einen zur Überführung der Behältnisse 10 eingerichteten Stift 9b sowie eine an dem Stift 9b angebrachte Rolle 9a auf. Die Rolle 9a ist an einer Befestigungsstruktur 9c befestigt, welche insbesondere mittels eines Linearantriebs 5a des Antriebssystems 5 relativ zu dem passiven Überführungselement 4 linear bewegbar ist oder umgekehrt, wodurch eine lineare Relativbewegung LRB zwischen der Schiebeeinrichtung 9 und dem passiven Überführungselement 4 erzeugt wird. Die Befestigungsstruktur 9c lässt eine Bewegung der Rolle 9a senkrecht zu dem ersten Bewegungspfad BP1, zweiten Bewegungspfad BP2 und dritten Bewegungspfad BP3 zu.

Die Rolle 9a stützt sich an dem passiven Überführungselement 4 ab und ist daran geführt. Der Stift 9b ist hierdurch über eine durch die Stirnfläche 4f gebildete Kontur des passiven Überführungselements 4 bewegbar, um das jeweilige Behältnis 10 zu überführen. Die Überführung wird bewirkt, wenn sich die Rolle 9a wie dargestellt an dem rampenförmigen Abschnitt 4b abstützt. Der Stift 9b bewegt sich dann senkrecht zu dem ersten Bewegungspfad BP1, zweiten Bewegungspfad BP2 und dritten Bewegungspfad BP3 und schiebt das Behältnis 10 mit seinem freien Ende von der ersten Behältnisaufnahme 2a in die zweite Behältnisaufnahme 3a.

### Bezugszeichenliste

- 1: Vorrichtung
- 2: Abgabehalterung
- 2a: erste Behältnisaufnahme
- 2b: Absatz
- 3: Annahmehalterung
- 3a: zweite Behältnisaufnahme
- 3a': oberer Teil
- 3a": unterer Teil
- 3b: Fase
- 4: passives Überführungselement
- 4a: Körper
- 4b: rampenförmiger Abschnitt
- 4c: weiterer Abschnitt
- 4d: Übergangsbereich
- 4e: Fase
- 4f: Stirnfläche
- 4g: Befestigungsstruktur
- 4h: Schraube
- 5: Antriebssystem
- 5a: Linearantrieb
- 5b: Steuerungseinheit
- 5c: Signalverbindung
- 8: Halteelement
- 9: Schiebeeinrichtung
- 9a: Rolle
- 9b: Stift
- 9c: Befestigungsstruktur
- 10: Behältnis
- 10a: Behältnishals
- 10b: Behältniskörper
- 10c: Behältnisboden
- A1: erste Behältnisachse
- A2: zweite Behältnisachse
- D1: erster Abstand
- D2: zweiter Abstand
- BP1: erster Bewegungspfad
- BP2: zweiter Bewegungspfad
- BP3: dritter Bewegungspfad
- LRB: lineare Relativbewegung

## Patentansprüche

1. Vorrichtung (1) zur Anpassung eines Abstandes zwischen Behältnissen (10), vorzugsweise Vials und/oder Karpulen und/oder Spritzen, aufweisend eine Abgabehalterung (2) mit mindestens zwei ersten Behältnisaufnahmen (2a), welche mit einem unveränderlichen ersten Abstand (D1) zueinander angeordnet und jeweils zum Halten eines der Behältnisse (10) eingerichtet sind, weiter aufweisend eine Annahmehalterung (3) mit mindestens zwei zweiten Behältnisaufnahmen (3a), welche mit einem von dem ersten Abstand (D1) unterschiedlichen unveränderlichen zweiten Abstand (D2) zueinander angeordnet und jeweils zum Halten eines der Behältnisse (10) eingerichtet sind, weiter aufweisend ein von der Abgabehalterung (2) und der Annahmehalterung (3) unabhängiges passives Überführungselement (4), mittels welchem eine Überführung der Behältnisse (10) von den ersten Behältnisaufnahmen (2a) zu den zweiten Behältnisaufnahmen (3a) bewirkbar ist, wobei die Vorrichtung (1) ein Antriebssystem (5) aufweist, welches dazu eingerichtet ist, eine lineare Relativbewegung zwischen der Abgabehalterung (2), der Annahmehalterung (3) und dem passiven Überführungselement (4) zu erzeugen.

2. Vorrichtung (1) nach Anspruch 1, dazu eingerichtet, dass zwischen Abgabehaltung (2), der Annahmehalterung (3) und dem passiven Überführungselement (4) mindestens zwei unterschiedliche lineare Relativbewegungen entlang eines ersten Bewegungspfades (BP1) und eines zweiten Bewegungspfades (BP2) erzeugbar sind.

3. Vorrichtung (1) nach Anspruch 2, wobei der erste Bewegungspfad (BP1) und der zweite Bewegungspfad (BP2) kollinear sind.

4. Vorrichtung (1) nach einem der Ansprüche 1 bis 3, wobei das passive Überführungselement (4) ortsfest angeordnet ist und die Abgabehalterung (2) und die Annahmehalterung (3) voneinander unabhängig bewegbar ausgebildet sind.

5. Vorrichtung (1) nach Anspruch 4, wobei das Antriebssystem (5) eine Steuerungseinheit (6) aufweist, welche dazu eingerichtet ist, die Abgabehalterung (2) und die Annahmehalterung (3) derart anzusteuern, dass diese sich mit voneinander unterscheidenden Geschwindigkeiten bewegen.

6. Vorrichtung (1) nach einem der Ansprüche 1 bis 3, wobei die Abgabehalterung (2) oder die Annahmehalterung (3) ortsfest angeordnet ist und das passive Überführungselement (4) sowie die jeweils andere der Abgabehalterung (2) und Annahmehalterung (3) voneinander unabhängig bewegbar ausgebildet sind.

7. Vorrichtung (1) nach Anspruch 6, wobei das Antriebssystem (5) eine Steuerungseinheit (6) aufweist, welche dazu eingerichtet ist, das Überführungselement (4) und die Abgabehalterung (2) beziehungsweise die Annahmehalterung (3) derart anzusteuern, dass diese sich mit voneinander unterscheidenden Geschwindigkeiten bewegen.

8. Vorrichtung (1) nach einem der vorhergehenden Ansprüche, wobei das passive Überführungselement (4) einen rampenförmigen Abschnitt (4b) aufweist, mittels welchem die Überführung der Behältnisse (10) bewirkbar ist.

9. Vorrichtung (1) nach einem der vorhergehenden Ansprüche, aufweisend eine mit dem passiven Überführungselement (4) koppelbare Schiebeeinrichtung (9), wobei das Antriebssystem (5) dazu eingerichtet ist, eine **li**neare Relativbewegung zwischen der Schiebeeinrichtung (9) und dem passiven Überführungselement (4) zu erzeugen.

10. Vorrichtung (1) nach Anspruch 9, wobei die Schiebeeinrichtung (9) einen zur Überführung der Behältnisse (10) eingerichteten Stift (9b) sowie eine an dem Stift (9b) angebrachte und sich an dem passiven Überführungselement (4) abstützende und daran geführte Rolle (9a) aufweist, sodass der Stift (9b) durch eine Kontur des passiven Überführungselements (4) bewegbar ist.

11. Vorrichtung (1) nach einem der vorhergehenden Ansprüche, wobei an mindestens einer der ersten Behältnisaufnahmen (2a) und/oder zweiten Behältnisaufnahmen (3a) ein, vorzugsweise als Clip-Element ausgebildetes, Halteelement (8) zum passiven Halten der Behältnisse (10) oder eine, vorzugsweise als Saug- und/oder Greifeinrichtung ausgebildete, Halteeinrichtung zum aktiven Halten der Behältnisse (10) vorgesehen ist.

12. Füllmaschine mit einer Vorrichtung (1) nach einem der vorhergehenden Ansprüche.

13. Verfahren zum Betreiben einer Vorrichtung (1) nach einem der Ansprüche 1 bis 11, aufweisend die folgenden Schritte:
a) lineares Bewegen der Annahmehalterung (3) relativ zu der Abgabehalterung (2) und dem passiven Überführungselement (4) oder lineares Bewegen der Abgabehalterung (2) und des passiven Überführungselements (4) relativ zu der Annahmehalterung (3), um eine Differenz zwischen dem ersten Abstand (D1) und dem zweiten Abstand (D2) zu überbrücken und eine erste Behältnisaufnahme (2a) mit einer zweiten Behältnisaufnahme (3a) in Deckung zu bringen,
b) synchrones lineares Bewegen der Annahmehalterung (3) und der Abgabehalterung (2) relativ zu dem passiven Überführungselement (4) oder lineares Bewegen des passiven Überführungselements (4) relativ zu der Abgabehalterung (2) und der Annahmehalterung (3), um die Überführung mindestens eines Behältnisses (10) zu bewirken.

14. Verfahren nach Anspruch 13, wobei die Annahmehalterung (3) mit zwei Geschwindigkeiten und die Abgabehalterung (2) und das passive Überführungselement (4) jeweils mit lediglich einer Geschwindigkeit oder die Abgabehalterung (2) und das passive Überführungselement (4) jeweils mit zwei Geschwindigkeiten und die Annahmehalterung (3) mit lediglich einer Geschwindigkeit bewegt wird.
